# EUROPEAN PATENT SPECIFICATION

(11) **EP 3 986 663 B1**
(45) Date of publication and mention of the grant of the patent: **15.01.2025**
(21) Application number: 20734363.3
(22) Date of filing: 22.06.2020
(51) Int. Cl.: B23K 28/02, B23K 5/02, B23K 26/24, F16K 5/06, F16K 27/10

(54) **A METHOD FOR MAKING A BALL VALVE FOR REGULATING A FLUID, A BALL VALVE AND A WELDING TOOL FOR HOLDING AND HANDLING VALVE PARTS**
VERFAHREN ZUR HERSTELLUNG EINES KUGELVENTILS ZUR REGULIERUNG EINES FLUIDS, KUGELVENTIL UND SCHWEISSWERKZEUG ZUM AUFNEHMEN UND HANDHABEN VON VENTILTEILEN
PROCÉDÉ DE FABRICATION D'UNE SOUPAPE À BILLE POUR RÉGULER UN FLUIDE, SOUPAPE À BILLE ET OUTIL DE SOUDAGE POUR MAINTENIR ET MANIPULER DES PIÈCES DE SOUPAPE

(30) Priority: 20.06.2019 EP 19181475
(43) Date of publication of application: 27.04.2022
(73) Proprietor: Broen A/S, 5610 Assens (DK)
(72) Inventor: LILDHOLDT, Mads Lindegaard, 5683 Haarby (DK); HANSEN, Morten Ulrik, 5750 Ringe (DK); MADSEN, Peder, 5250 Odense SV (DK)
(74) Representative: Patrade A/S
(86) International application number: PCT/EP2020/067299
(87) International publication number: WO 2020/254680

(56) References cited:
- CN-A- 103 056 537
- CN-A- 107 243 704
- JP-A- H07 174 253
- JP-A- S5 850 375
- US-A- 3 869 108

## Description

### Field of the Invention

The present invention relates to a ball valve for regulating a fluid, the ball valve including a valve housing with a central part and with two connection ends, the connection ends extending away from the central part, wherein internally of the central part there is arranged a ball with at least one through-going aperture, wherein the ball is arranged relative to one or more valve seats in the central part of the valve housing.

The present invention also relates to a method for producing the ball valve.

Finally, the present invention also relates to a welding tool for holding and handling housing parts and a ball of the ball valve during welding.

### Background of the Invention

It is commonly known to make valves, e.g. ball valves, and thereby valve housings of several parts and then assemble these parts around a valve seat and a ball. Such valve housings have traditionally been made of brass or other cupper-based alloy.

Lately, there has been introduced methods for making valve housings in steel, e.g. carbon steel or stainless steel which is cheaper and which can be worked with modern production equipment directly from a plate piece or a tube piece faster and cheaper than possible when casting and machining workpieces of brass.

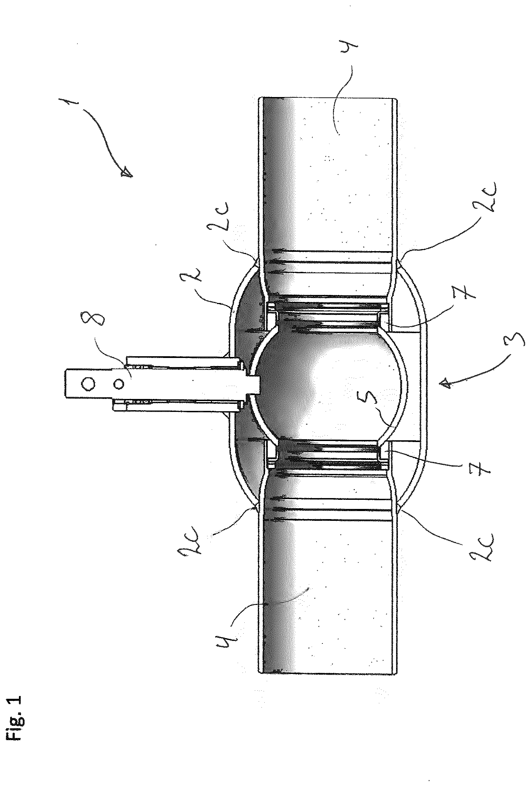

The valve housing is typically assembled of several parts, e.g. by processing of the connection ends and the central part of the housing separately and then assembling the valve housing after installing the ball and valve seats inside the central part of the housing (see fig. 1). The housing may be assembled by corresponding screw threads in respective parts, or alternatively by means of bolted flanges, by welding parts together or by combinations thereof.

When speaking of a ball valve, the ball is, as indicated by the name, usually spherical and with an outer size which is greater than the connecting openings in the valve housing. Ball valves can also have non-spherical balls.

Such a valve therefore has a valve housing with an internal geometry in which valve seat and ball are disposed. The valve housing is typically joined in the vicinity of the ball as the latter requires the largest internal dimension. Such valves are typically made of cast workpieces or the workpieces are shaped from a tubular item or a rod item. The workpieces are formed and shaped by machining into the desired geometry. This shaping process is, however, rather cost-intensive for several reasons. The individual workpieces are to be cast and then handled and machined one by one in a suitable metal cutting unit. Since the workpieces are individually machined, the process is time-consuming, irrespective of the application of modern and rapid processes.

In addition to the handling and machining of the cast workpieces prior to assembling around a valve seat and a ball, the cost of the material also plays a significant role. Brass or other alloys are most often expensive and imply an appreciably greater cost than e.g. common weldable carbon steel or stainless steel.

There exist methods where a valve housing of a ball valve is made of two housing parts and where the welding seam is provided as a single welding seam arranged centrally at the central housing part of the valve housing.

In this known method, a protective band is arranged inside the central part of the valve housing between the ball and the valve housing inner surface. After finishing the welding seam, this protective band must be extracted from the valve. This is rather difficult and must be done through a connection end. The ball valve is placed in half open position and the protective band can then be extracted from the valve interior. This is rather difficult and time consuming as there is limited space available for withdrawing this protective band from the valve interior.

If e.g. plasma welding is used, the high temperatures result in that the temperature sensitive items, i.e. the ball, the valve seats etc., are prone to being damaged by the increased temperatures used in plasma welding. This method also suffers, among others, from the drawback that it is not possible to provide a welding seam that penetrates the valve housing from outside surface to inside surface. This incomplete penetration of the welding seam may cause cavities along the inside of the welding seam. Such incomplete welding seams may cause crevice corrosion in the welding seam in the interior of the valve housing. Further, in most instances, when welding using added material in the welding seam may cause molten added material to run into the valve housing and then attach (as hardened metal) to the inner surface of the valve housing and/or the ball arranged inside the central part. This may result in a useless valve.

CN 107243704 A describes a manufacturing method where the valve element and valve housing is casted and coated with a high-temperature paint before assembly. Supports are welded to the valve housing before assembly. A tool arm is mounted to the valve housing and to valve element at one end. The valve element is rotated and fixed at an angle of 45 degrees. The valve housing is preheated to 100°C before welding a first portion of the two housing parts together. The valve element is afterwards rotated 90 degrees and fixed again. The remaining portion of the two housing parts is then welded together.

JPH 07174253 A describes a method of inspecting the welding of a ball valve, where a film is arranged along the exterior of the weld and an arm with a pivotal member is inserted into the valve housing trough the connecting end. The ball is secured to the pivotal member by screws through the valve spindle opening in the valve housing. The ball is pivoted into an angle of approximately 45 degrees so that the welding seam can be exposed by a radiation source located on the arm. Any defects in the welding steam are then captured by the film.

At the same time, it is also greatly desired to perform as few welding processes as possible on a valve and to reduce man-hours and thus costs when producing the valves. This is because such welding process steps are time consuming, which of course raise the overall cost of the product. In addition, reducing the number of welding seams to a minimum will in general increase the quality level for the valve production, since the lower number of welding seams also lowers the risk occurrence of flaws or errors in each valve.

### Object of the Invention

It is the object of the present invention to provide a ball valve, a method for making the valve as well as a welding tool to enable the production of the valve which is:
to manufacturing of ball valves, and has following advantages:
▪ Minimizing the welding operations to a minimum
▪ High speed production of the valves.
▪ Automation of welding operation is possible.
▪ Homogene welding seams.
▪ No creation of surplus material during welding processes.
▪ Strong, uniform and/or high quality welding seams on valve bodies.
▪ Protection of seals, valve seats, ball etc. during welding as these are mounted in the valve housing prior to the welding process.
▪ Valve can be produced with minimum weight and reduced material costs.
▪ Video inspection possibility inside the valve housing during welding ensures 100% verification of welding seam quality during the production thereof.

### Description of the Invention

These objects are met by a method, according to claim 1, for producing a valve for regulating a fluid, the valve including a valve housing with a central part and with two connection ends, the connection ends extending away from the central part. Internally of the central part there is arranged a valve element. The valve element is arranged relative to one or more valve seats in the central part of the valve housing.

The method of producing the valve housing at least includes the following steps:
- providing at least a first housing part and a second housing part, said first and second housing parts each comprising at least a central housing part and a connection end, and
- providing a valve element shaped as a ball with at least one through-going aperture,
- arranging the first and second housing parts at a position with the central part ends facing towards each other, and further arranging the ball at a position inside an inner space of the central part,
- welding the first and second housing parts using a welding tool while performing a relative rotation in a rotating direction about an axial rotation axis between the position of the first and second housing parts and the positions of the ball and the welding tool to provide a valve housing with a single welding seam arranged at the central part of the valve housing, the rotation axis coinciding with a central axis of the ball, wherein the welding is performed either from the inner space or an outer side of the central part and that the relative rotation is performed by:
   - rotating the first and second housing parts relative to the positions of the ball and the welding tool, and/or
   - rotating the ball and the welding tool relative to the position of the first and second housing parts.

Hereby is obtained a fast and effective method for making ball valves and arranging the balls inside the central part of the valve housing before assembling the valve housing.

The method uses a welding tool as described further below, which rotates the housing parts during welding thereof while maintaining the ball in a fixed and non-rotating position, or vice versa. Alternatively, both the housing parts and the ball may rotate during welding, preferably in opposite rotating directions.

Unless otherwise specified, the term "relative rotation" used herein refers to any rotating movement performed between the valve housing parts and the ball (and welding laser/torch) seen in a rotating direction about the rotation axis.

This also enables that the valve housing can be produced with minimum weight and reduced material costs as the production produces substantially no surplus/waste material.

Thus in practice it is possible to provide a spherical central part on the valve housing, which is only slightly larger than the ball installed inside the valve housing. Thus there may be as little as 0.5-5 mm free space between the outside of the ball and the inside of the valve housing, depending on the overall size of the valve.

The welding is preferably performed from the inner space or the outer side of the central part. Compared to conventional welding methods, the method allows for a more flexible welding of the valve housing parts where the welding laser/torch can be positioned either outside or inside the central part of the valve housing. The welding can thus be performed on one or both sides of the housing parts depending on the particular welding setup and/or design of the ball valve.

This also enables that the valve housing can be produced with a minimum of the welding operations, as the valve housing may be made with a single welding seam on the central part of the valve housing.

Further the method ensures homogene welding seams and strong, uniform and/or high quality welding seams on the valve bodies.

The welding seam is preferably made with laser welding which provides a low input of heat to the metal forming the valve housing. Laser welding also provides a welding seam which is uniform and of uniform high quality. In addition, laser welding does not add any significant welding seam and thus no added material, since laser welding is based on melting a small fraction of the valve housing welding ends. This further reduces the risk of damaging or destroying the ball and /or valve seats, seals or packings etc. that are pre-installed inside the valve housing's central part prior to welding together the valve housing parts. The welding seam may also be made using cold metal transfer (CMT) welding. Other welding technologies may also be applicable, in particular welding process with low heat emission.

The protective gas ensures corrosion protection in the welding area as oxygen is removed during welding. Further, the protective gas may also provide protection of seals, valve seats, ball etc. during welding. By providing a protective gas inside the valve housing, this gas may also provide some cooling to the interior parts resulting protection against heat during welding of the heat sensitive parts, which were arranged inside the valve housing prior to the welding step. Thus the protective gas may also assist in protection of seals, valve seats, ball etc. during welding. The protective gas can be selected by the skilled person depending on materials used for valve housing and/or ball and/or to apply to the welding process selected.

The protective gas can be provided to the inner space of the valve housing's central part by several possible ways, such as through one or more bore/pipe connection(s) through the arm and/or through a connection end's opening.

The first and second housing parts are preferably identical in shape. This will provide a final valve housing with the single welding seam at the centre of the central part of the valve housing and a symmetrical valve housing. This reduces the number of different parts on stock when producing the valves according to the invention. The central opening in the central part for installing the valve spindle may thus be aligned with the indexer and thus may be used for inspecting the correct position etc. of the indexer of the welding tool (for description of the indexer, see further below).

The housing parts are pre-shaped into their final form prior to subjecting to the welding operation. The housing parts are preferably made from tubular item, where the central housing part and the connection ends are formed by modern production equipment directly from a tube piece by plastic deformation. The plastic deformation may e.g. comprise increasing the diameter of the first end part and thus forming and/or shaping the valve housing's central part and/or reducing the diameter of at least a part of the tubular item that forms the connection end part.

In this manner it is also possible to provide the distal ends (i.e. the ends of the connection ends that face away from the central part) of the connection ends with means for connection to another element, e.g., another pipe. The shape of the distal end may thus depend on the connection means provided on the other pipe member. The distal ends, may thus e.g. be provided with flanges, increased or reduced diameter, or without changing diameter as needed to ensure proper connection to the other pipe member by conventional means.

Plastically deformed workpieces are normally to be stress-relieving annealed in order to restore the original properties. When using the present method, the housing parts can be pre-shaped and then stress-relieving annealed prior to the welding together of the valve housing parts.

Conventional casting and machining workpieces into the desired shape of the final housing parts are also possible, although higher overall costs are expected due to the increase in different working processes for obtaining the housing parts.

The valve seat(s) can by the present method be arranged in the first and/or the second housing parts prior to the assembly of the valve housing.

As already indicated above, the ball is maintained in a fixed, non-rotating position inside the central part of the valve housing by means of a welding tool. The welding tool comprises holding means to hold the ball in a position inside the central part of the valve housing. The holding means may e.g. be an arm with an indexer. The valve ball body is thus held in a fixed position on the arm by inserting the arm with the indexer through the through-going aperture in the ball body. The ball body is then held in fixed, non-rotating position on the arm by means of the indexer engaging an indexer aperture in the ball from the inside of the ball body.

Alternatively the welding tool's holding means to hold the ball in a position inside the central part of the valve housing comprises an expandable mandrel, which can hold the ball element firmly on the mandrel, when the mandrel is inserted into the through-going aperture and then expanded.

The holding means may optionally be fitted rotating means for rotating the ball about the rotation axis relative to the housing parts. Other holding means may thus be used to maintain the housing parts in a fixed, non-rotating position relative to the ball.

The indexer is held in fixed position below the position where the welding occurs. This enables the indexer to collect any surplus material arising from the welding procedure. Thus any melted metal from the welding process is caught in the indexer and cannot attach to the ball or the valve seats, seals etc. The indexer and its ability to collect melts from the welding process are described in further details below.

This provides a simple and effective control of the fixed position of the ball and provides the effective protection of the ball against collecting any surplus melt from the welding surface.

Preferably, a camera arranged on the arm of the welding tool is inspecting the welding seam on the interior of the valve housing's central part. This enables video inspection and the possibility to ensure verification of welding seam quality during the production thereof.

The objects of the present invention are also met by a ball valve, according to claim 8, for regulating a fluid, the ball valve including a valve housing with a central part and two connection ends, the connection ends extending away from the central part, wherein internally of the central part there is arranged a valve element shaped as a ball with at least one through-going aperture, wherein the ball is arranged relative to one or more valve seats in the central part of the valve housing, wherein the valve housing is assembled by a single welding seam provided centrally at the central part of the valve housing.

As the ball valve is made from the method as outlined above and using the welding tool as mentioned below, the ball valve as such also obtains the above mentioned advantages and effects as described in relation to the method and the welding tool.

The ball valve is in particular a floating ball valve or a trunnion ball valve.

The ball preferably comprises an indexer aperture. The indexer aperture is able to cooperate with the indexer of the welding tool as described above in relation to the method. Reference is also made to the more detailed description of the welding tool and the indexer thereof further below.

The indexer aperture may be dispensed with if the ball holding means comprise an expandable mandrel as mentioned below. Then the spindle opening may act similar to the indexer aperture and follow the welding torch's /laser's position. Further, the spindle opening in the ball may be used for sucking out any surplus melted matter as discussed above and/or below. The spindle opening may also be used for introducing or extracting protective gas/backing gas into the central part's inner space.

The indexer aperture in the ball is adapted in size, shape and/or position to engage with an indexer of a welding assisting tool.

The objects of the present invention are also met by a welding tool, according to claim 11, for holding and handling housing parts and a ball of a ball valve during welding, said welding tool comprises:
- a welding laser or welding torch configured to be at least positioned relative to the housing parts and to be weld the housing parts together from an inner space or an outer side of a central part of a valve housing,
- holding means configured to hold the ball in a position inside the central part of the valve housing of the ball valve, and
- rotation means configured to perform a relative rotation about an axial rotation axis between a position of the valve housing parts and the positions of the ball and the welding laser or welding torch, wherein the relative rotation performed by the rotation means is:
   - rotating the first and second housing parts relative to the positions of the ball and the welding laser or welding torch, and/or
   - rotating the ball and the welding laser or welding torch relative to the position of the first and second housing parts.

The holding means preferably comprises an arm with a radial bore in which an indexer is arranged, and where the indexer is slidably arranged to slide radially out of and/or into the radial bore by means of an indexing actuator arranged in the arm, as already mentioned above and as disclosed further below.

Alternatively the welding tool's holding means comprises an expandable mandrel configured to be inserted into a through-going aperture of the ball, wherein the mandrel is further configured to be expanded when inserted into the through-going aperture so that the ball is held firmly on the mandrel.

This enables that the ball can be held fixed while the housing parts can be rotated, or vice versa, during the welding procedure. In addition, the automated handling of the valve housing parts during welding further enables that the welding procedure can be automated in a simple, low cost and effective manner. The automation of the welding procedure may e.g. comprise use of robots to perform mounting of valve parts in the welding tool and/or to perform the welding step.

The rotation axis of the valve housing parts and the longitudinal axis/axial direction of the arm are in principle coinciding. The central axis of the ball may further coincide with the above rotation axis.

The welding tool's arm comprises a radial bore in which the indexer is mounted. The shape of the bore corresponds to the shape of the indexer and is e.g. circular, oval, or polygonal, e.g. triangular, square, rectangular, or more sides. The shape of the bore and the indexer is not important as long as the indexer in some embodiments (discussed further below) is not able to rotate inside the bore.

The indexer is arranged to be slide radially out of and/or into the radial bore by means of an indexing actuator arranged in the arm. Thus the indexer actuator pushes the indexer radially out of the radial bore. Thereby, the indexer engages the indexer aperture in the ball and ensures that the ball is held in fixed position on the arm as already described above. The indexer may also be angled in relation to radial position, e.g. if the welding seam is arranged in non-symmetrical position on the central part of the valve housing. This may e.g. be relevant when shape of the central part of the valve housing is cylindrical (or otherwise not spherical.)

The indexer is held in a fixed position below the welding spot where the welding occurs. The indexer is thus able to collect any melted material from the welding step in a bore extending radially inward in the indexer body (i.e. radially inwards in relation to the rotation axis). Thereby, the indexer also holds the ball in a fixed, non- rotating position during the welding procedure, if the valve housing parts are rotated. Even if the indexer and ball are rotated and the valve housing parts fixed, non- rotating position, the indexer is still held in a fixed position below the welding spot. The welding laser/torch and the indexer are thus aligned in the radial direction to ensure that the melted material is collected at all times. The bore in the indexer body is preferably cylindrical or conical and thus provides a funnel-like member for collecting surplus melted matter.

The indexer actuator comprises a rod-like member that is moveable in axial direction of the arm. The outer end of the indexer actuator comprises a wedged surface in contact with a corresponding sliding surface on the indexer. Thus, when extended from the arm, the indexer actuator pushes the indexer radially outwards as the indexer slides up the wedged surface. When retracting the indexer actuator, the indexer slides back down the wedged surface on the indexer actuator and is withdrawn into the arm.. The shape of the indexer actuator is not important as long as the indexer actuator is able to push the indexer out of the indexer bore. Alternatively, a pneumatically, electrically or hydraulically indexer actuator, e.g. a piston or cylinder may be used.

The welding tool further comprises rotation means for rotating the valve housing parts about an axial rotation axis and about the arm of the welding tool. This enables rotation of the housing parts during the welding procedure, while the ball is held in fixed, non-rotation position on the arm.

The rotation means for rotating the valve housing parts about an axial rotation axis preferably comprise a turret and a bearing. The bearing is arranged to surround the arm and to support a support bushing for holding a connection end of a first valve housing part. The turret is arranged to engage with the opposite connection end of the second valve housing. The reverse order is also possible, i.e. that the turret is arranged to surround the arm while the bearing with the support bushing is arranged at the opposite end valve housing when arranged in the welding tool.

The turret enables rotation of the valve housing parts during welding by rotating the first housing part, and the bearing supports the co-rotation of the second housing part since the two housing parts are clamped between the bearing with the support bushing and the turret.

The welding laser, or welding torch, is held in fixed position while the valve housing rotates during welding of the welding seam surrounding the central part of the valve's housing.

The reverse is equally possible, as the welding laser or welding torch may be rotated around the stationary valve housing during the welding procedure while holding the indexer under the welding area all the time. In this situation, the ball is also rotated together with the welding torch or welding laser. In this situation, the protective gas is preferably also circulated inside the valve housing by withdrawing the protective gas through the bores in the indexer and the arm, e.g. by suction as also outlined below.

This enables that the indexer is able to collect any melted surplus matter as the melted matter is sucked into the indexer bore. Thus the indexer is also able to collect melted matter from the welding step even though the indexer's opening is angled downwards (during its rotation).

When welding is finished, the valve housing will be aligned with the ball so as to align the opening in the valve housing for mounting of the spindle stub and a spindle with the spindle mounting opening in the ball for mounting of the spindle.

The spindle stub with the spindle arranged herein can then be arranged in the opening in the valve housing. After mounting the spindle stub and spindle, the spindle stub may be laser welded to the housing. This can be done by holding the laser welding torch in fixed position and rotate the laser welding tool about a the spindle stub's axis to provide a laser welded seam at the transit between the valve housing and the spindle stub.

When the indexer is deactivated (i.e. withdrawn into the radial bore in the arm of the welding tool) it is noted that the ball will rotate together with the housing as the valve seats holds the ball in position in relation to the valve housing.

As already mentioned above, the welding tool comprises one or more gas ducts for introduction and/or withdrawal of a protective gas into the inner space of the valve housing.

The protective gas can be provided to the inner space of the valve housing's central part by several possible ways, such as through one or more bore/pipe connection(s) through the arm and/or through a connection end's opening.

In a preferred variant, the protective gas is applied out through the indexer as this ensures that protective gas is supplied very close to the welding area. Alternatively, the protective gas may be withdrawn through the bores in the indexer and the arm, e.g. by suction. This is possible if the indexer further comprises a connecting bore for connecting at least one gas duct in the arm with the indexer's radial bore at least when the indexer is in the expanded position.

The welding tool may be provided with a camera mounted on the arm. The camera is preferably directed in the opposite direction of the indexer. The camera is e.g. directed radially outwards and directed towards an opening in the ball for the valve spindle (which is to be fastened after the valve housing parts are welded together). In this way, the camera can be connected to a computer with relevant software and is able to inspect the welding seam on the interior of the valve housing during the welding procedure. This improves the quality of the valves as the welding procedure can be adapted in case the camera inspection detects flaws or errors in the welding seam. The result will be a lower number of "off-spec" valves, and thus further reduced overall production costs.

As described earlier, the rotation means of the welding tool is preferably configured to rotate the first and second housing parts relative to the positions of the ball and the welding laser or welding torch, and/or to rotate the ball and the welding laser or welding torch relative to the position of the first and second housing parts.

Compared with CN 107243704 A, the ball and arm is continuously rotated about a longitudinal rotation axis while the valve housing parts are held in a non-rotating position, or vice versa, during welding. Further, the valve housing parts are welded together in a continuous process whereas the welding process in CN 107243704 A is performed in two steps. This provides a faster and simpler assembly process that advantageously can be performed by robot units.

The welding laser/torch may be aligned relative to the welding ends of the valve housing parts from the outer side of the valve housing. The welding laser/torch may be connected to an external power/energy source so that it projects a welding beam, e.g. a laser beam, directly onto area of the welding spot to form the welding seam. Alternatively or additionally, the welding laser/torch may be aligned relative to the connection end of one of the valve housing parts. One or more mirrors may then be arranged inside the valve housing, particular the inner space of the central part, for reflecting the welding beam. The mirror(s) may be aligned with the welding ends of the valve housing parts and further with the welding laser/torch so that the welding beam is reflected onto the area of the welding spot.

The indexer may held in fixed position at the outer side of the valve housing below the position where the welding occurs. Alternatively or additionally, the indexer may be held in a fixed position at the inner space of the valve housing below the welding spot. This enables the indexer to collect any surplus material arising from the welding procedure so it cannot attach to the ball or the valve seats, seals etc.

If the welding is done from the interior, the ball may be held in fixed, non-rotating position in the inner space of the valve housing. An arm may extend into the connection of one of the valve housing parts, preferably in the opposite connection end of the welding laser/torch. The arm may have a free end shaped so that it faces the indexer aperture of the ball when inserted into the connection end, wherein the arm's free end may be flushed with the outer surface of the ball or project slightly into the space between the ball and the central part of the valve housing.

Although the invention is primarily described herein in relation to ball valves below, it is clear that the present invention may also be applicable with other types of valves where the ball is arranged inside the valve housing, in particular in a section of the valve housing with increased cross sectional size in relation to the connection ends.

### Description of the Drawing

The invention will now be explained below with reference to the drawing, where:
- Fig. 1: shows a prior art valve assembled with two welding seams in a cross sectional view,
- Fig. 2: shows a valve with a valve housing according to the invention,
- Fig. 3: shows the valve in fig 1 in a cross sectional view,
- Fig. 4: shows a ball of a ball valve according to the present invention,
- Fig. 5: shows a pre-shaped and pre-assembled valve housing part for making a valve according to the present invention,
- Fig. 6a-c: show steps in the process of welding together of the valve housing parts shown in fig. 5, and
- Fig. 7: shows an alternative embodiment of assembling the valve housing parts according to the invention.

In the explanation of the figures, identical or corresponding elements will be provided with the same designations in different figures. Therefore, no explanation of all details will be given in connection with each single figure.

### Detailed Description of the Invention

Fig. 1 shows a traditional ball valve in a cross sectional view. In the present fig. 1 ball valve is a floating ball valve. The valve has a valve housing 2 with connection ends 4 attached to the central part 3 where the connection ends 4 face in opposite longitudinal directions of the valve housing 2. Traditional valve housings are welded together by a welding seam at the transit area 2c between the central part 3 and the each of the connection ends 4a,4b respectively.

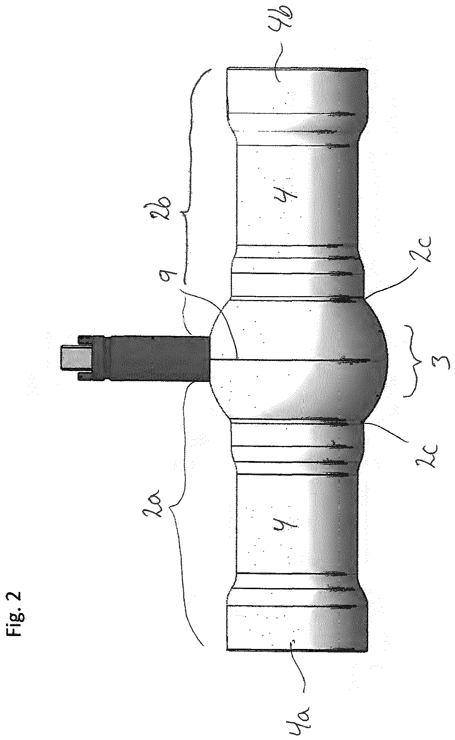

Fig. 2 shows a valve 1 according to the present invention. The valve also has a valve housing 2 with connection ends 4 attached to the central part 3.

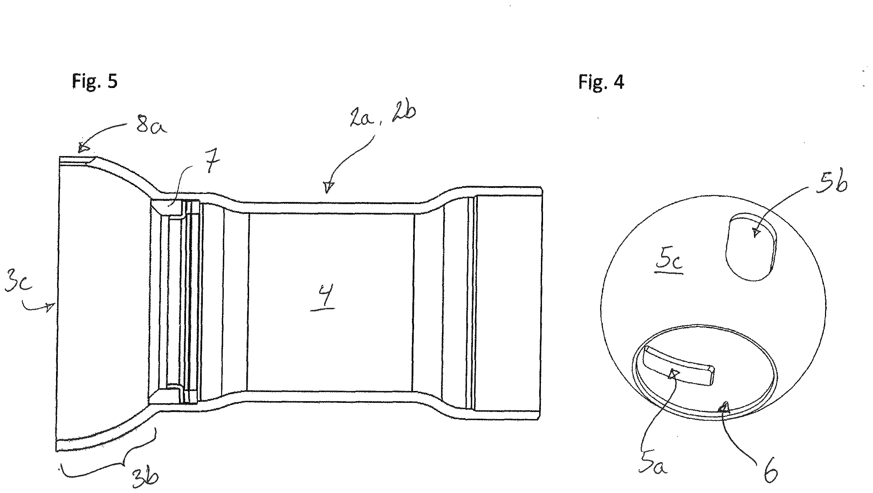

The valve in fig. 2 is made with a single welding seam 9 that surrounds the central part 3. In fig. 2 a valve spindle is arranged in a spindle stub 8. Thus the valve housing in fig. 1 is made from two pre-formed housing parts 2a,2b as shown in fig. 5. The housing half parts 2a, 2b are pre-formed as described further above. Each housing part has valve seat 7 installed prior to assembly of the valve housing by welding together the housing half parts 2a, 2b at the welding end 3c (see also fig. 5).

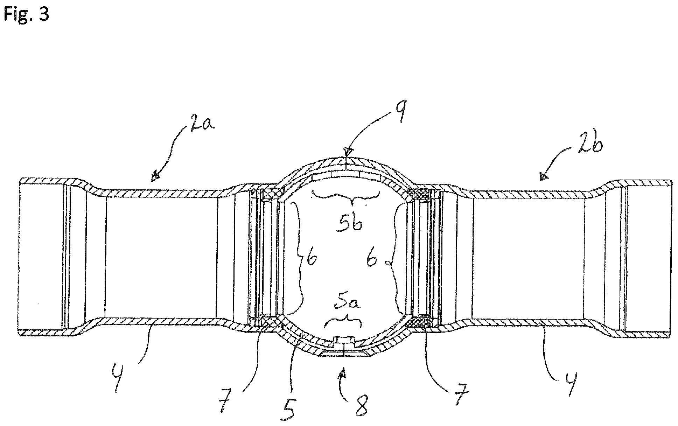

Fig. 3 shows a cross section of the valve in fig. 2 (valve spindle and spindle stub 8 are not disclosed in fig.2). The ball 5 shown in fig. 3 is a ball 5 with at least a through-going passage 6 that allows a fluid flow through the ball body 5c. The ball is also shown in fig. 4. The ball body 5c comprises through-going aperture 6 and a spindle attachment opening 5a. An indexer aperture 5b is also arranged in the ball 5. The function of the indexer aperture 5b is described further below. In fig. 4, the indexer aperture 5b is shown as oval although other shapes are possible as also discussed above, as long as the indexer aperture 5b allows the indexer 12 to pass into the indexer aperture 5b and fix the ball body 5c firmly in a non-rotating manner as also discussed further below.

As shown in fig. 3 the ball body 5c is positioned inside the central part 3 of the valve housing 2 and is held in position between the valve seats 7. The welding seam 9 is arranged centrally on the valve housing's central part 3.

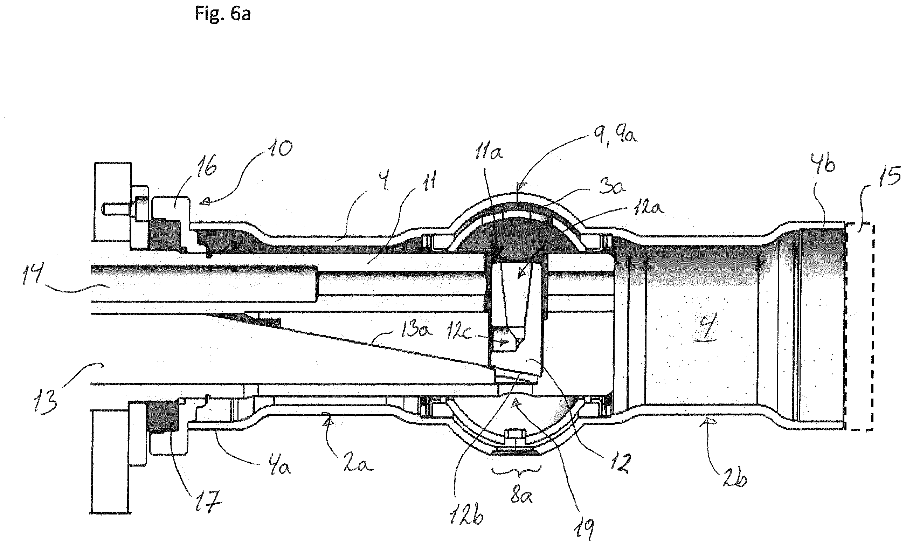

Next the welding tool and the method of producing the valve is described with reference to figs. 6a-6c.

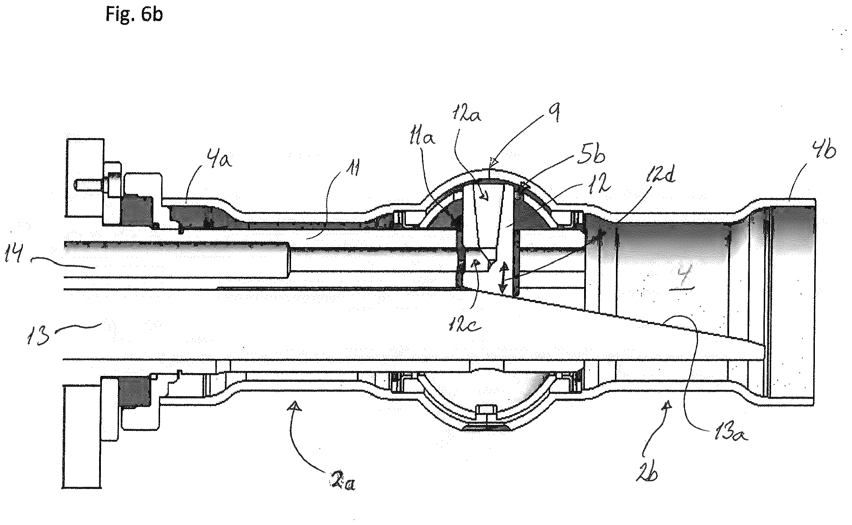

The welding tool 10 is configured for holding and handling the valve housing parts 2a,2b and the ball 5 during welding. The welding tool comprises an arm or a shaft 11 with a radial bore 11a in which an indexer 12 is arranged. The indexer 12 is slidably arranged inside the arm 11 and configured to slide radially out of and/or into the radial bore 11a by means of an indexer actuator 13 arranged in the arm 11 as illustrated with arrow 12d in fig. 6b.

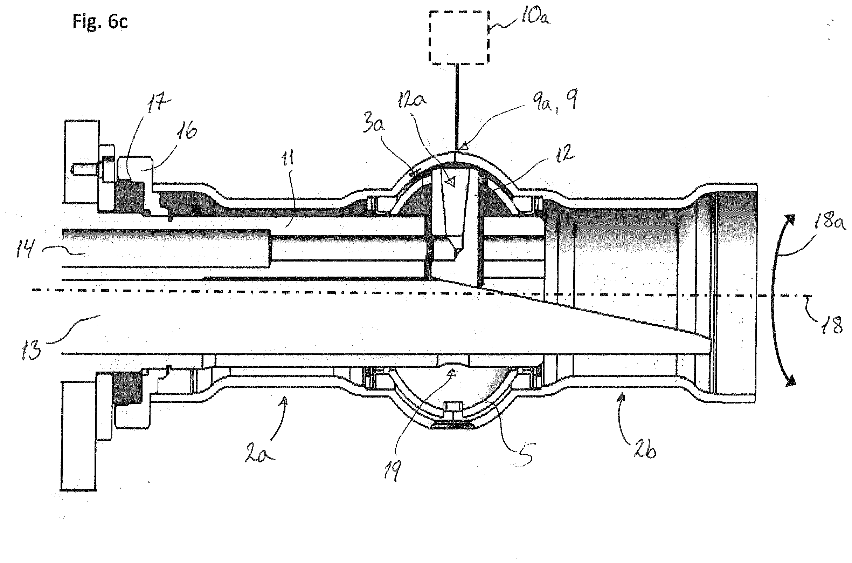

The welding tool further comprises rotation means 15, 17 for rotating the housing parts about the rotation axis 18 that is coinciding with the arm's11 axial axis, see arrow 18a on fig. 6c.

Thereby, the ball 5 can be held fixed while the housing parts 2a,2b can be rotated during the welding procedure. This further enables that the welding seam is uniform and of uniform high quality. In addition, the automated handling of the valve housing parts during welding further enables that the welding procedure can be automated in a simple, low cost and effective manner. The automation of the welding procedure may e.g. comprise use of robots to perform mounting of valve parts in the welding tool and/or to perform the welding step.

The rotation axis of the valve housing parts and the longitudinal axis/axial direction of the arm 11 are in principle coinciding and is shown in fig. 6a and 6c as line 18.

Alternatively, the rotation means 15, 17 can be arranged so that the arm 11 and thus the ball 5 are rotating about rotation axis 18 instead of the housing parts 21, 2b. Thereby, the housing parts 2a, 2b can be held fixed while the ball 5 can be rotated during the welding procedure. This also enables that the welding seam is uniform and of uniform high quality.

The indexer 12 is arranged to be slide radially out of and/or into the radial bore 11a by means of an indexing actuator 13 arranged in the arm 11. As discussed above, the shape of the indexer actuator is not important and may e.g. alternatively comprise a pneumatically, electrically or hydraulically driven indexer actuator, e.g. a piston or cylinder may be used. Thus, the indexer actuator shown in figs. 6a-6c is merely an example of a possible construction of the indexer actuator.

In figs. 6a-6c, the indexer actuator is movable in axial direction 18 as illustrated with arrow 13b in fig. 6b. Thereby the wedged surface 13a on the indexer actuator 13 pushes the indexer radially out of the radial bore 11a in the arm 11 by means of its contact with a corresponding sliding surface 12b on the inner end of the indexer 12. Thus, when extended from the arm 11, the indexer actuator 13 pushes the indexer 12 radially outwards (see arrow 12d in fig. 6b) as the indexer 12 slides up the wedged surface 13a on the indexer 13. When retracting the indexer actuator 13, the indexer 12 slides back down the wedged surface 13 on the indexer actuator 13 and is withdrawn into the radial bore 11a in the arm 11.

The indexer 12 is held in a fixed position below the spot 9a where welding occurs. The indexer 12 is thus able to collect any melted material from the welding step in a bore 12a extending radially inward in the indexer body 12 (i.e. radially inwards in relation to the rotation axis). Thereby, the indexer 12 also holds the ball 5 in a fixed, non-rotating position during the welding procedure. The bore 12a in the indexer body is preferably cylindrical or conical as shown in figs 6a-6c and thus provides a funnel-like member for collecting surplus melted matter. It is noted that the indexer 12 can be taken out of the radial bore 11a and replaced with a new indexer (or a cleaned indexer), e.g. if the indexer bore 12a is blocked by melted matter. It is noted that the funnel/conical shape of the bore 12a is preferred as the bore 12a is then easier cleaned for any melted metal caught herein.

The welding tool 10 further comprises rotation means 15,17 for rotating the valve housing parts 2a,2b about an axial rotation axis 18 and about the arm of the welding tool. This enables rotation of the housing parts 2a,2b during the welding procedure, while the ball 5 is held in fixed, non-rotation position on the arm.

The rotation means for rotating the valve housing parts about an axial rotation axis preferably comprises a turret 15 and a bearing 17 in figs. 6a-6c, the bearing 17 is arranged to surround the arm 11 and to support a support bushing 16 for holding a connection end 4a of a first valve housing part 2a. The turret 15 is arranged to engage with the opposite connection end 4b of the second valve housing part 2b. The reverse order is also possible, i.e. that the turret 15 is arranged to surround the arm 11 while the bearing 17 with the support bushing 16 is arranged at the opposite end valve housing 1 when arranged in the welding tool 10.

The turret 15 enables rotation of the valve housing parts 2a,2b in a rotation direction 18a during welding by rotating the first housing part 2a, and the bearing 16 supports the co-rotation of the second housing part 2b since the two housing parts are clamped between the bearing 17 with the support bushing 16 and the turret.

The welding laser or welding torch 10a is held in a fixed position, while the valve housing 2 rotates during welding of the welding seam 9 surrounding the central part 3 of the valve's housing 2. The reverse is equally possible, as the welding laser or welding torch may be rotated around the stationary valve housing 2 during the welding procedure while holding the indexer 12 under the area of the welding spot 9a (corresponding to the welding seam 9) at all the time. In this situation, the protective gas is preferably circulated inside the valve housing 2b by withdrawing the protective gas through the bores 12a, 12c in the indexer 12 and at least one bore in the arm, e.g. by suction as also outlined below. This enables that the indexer 12 is able to collect any melted surplus matter as the melted matter is sucked into the indexer bore 12a. Thus the indexer is also able to collect melted matter during welding even though the indexer's opening /bore 12a is angled downwards (during its rotation).

When welding is finished, the valve housing 2 will be aligned with the ball 5 so as to align the opening 8a in the valve housing for mounting of the spindle stub and a spindle 8 at the spindle mounting opening 5a in the ball 5.

The spindle stub with the spindle arranged herein can then be arranged in the opening 8a in the valve housing. After mounting the spindle stub and spindle 8, the spindle stub may be laser welded to the housing. This can be done by holding the laser welding torch in fixed position and rotate the laser welding tool about the spindle stub's axis to provide a laser welded seam at the transit between the valve housing and the spindle stub.

When the indexer 12 is deactivated (i.e. withdrawn into the radial bore 11a in the arm of the welding tool, see fig. 6a) it is noted that the ball 5 will be able to rotate together with the valve housing 2 as the valve seats 7 holds the ball 5 in position in relation to the valve housing 2.

The protective gas can be provided to the inner space 3b of the valve housing's central part 3 by several possible ways, such as through one or more bore/pipe connection(s) 14 through the arm and/or through a connection end's opening. The protective gas thus also serves as a backing gas during the welding step.

In a preferred variant, the protective gas is applied out through the indexer 12 as this ensures that protective gas is supplied very close to the welding area 9. Alternatively, the protective gas may be withdrawn through the bores in the indexer 12a,12b and the arm 14 . This is possible if the indexer 12 further comprises a connecting bore 12c for connecting at least one gas duct 14 in the arm with the indexer's radial bore 12a at least when the indexer is in the expanded position as shown in figs. 6b-6c.

The welding tool may be provided with a camera 19, which is preferably mounted on the arm. The camera 19 is preferably directed in the opposite direction of the indexer. The camera is e.g. directed radially outwards and directed towards the spindle opening 5a in the ball 5 for attachment of the valve spindle 8. In this way, the camera can be connected to a computer with relevant software and is able to inspect the welding seam on the interior of the valve housing during the welding procedure. This improves the quality of the valves as the welding procedure can be adapted in case the camera inspection detects flaws or errors in the welding seam. The result will be a lower number of "off-spec" valves, and thus further reduced overall production costs.

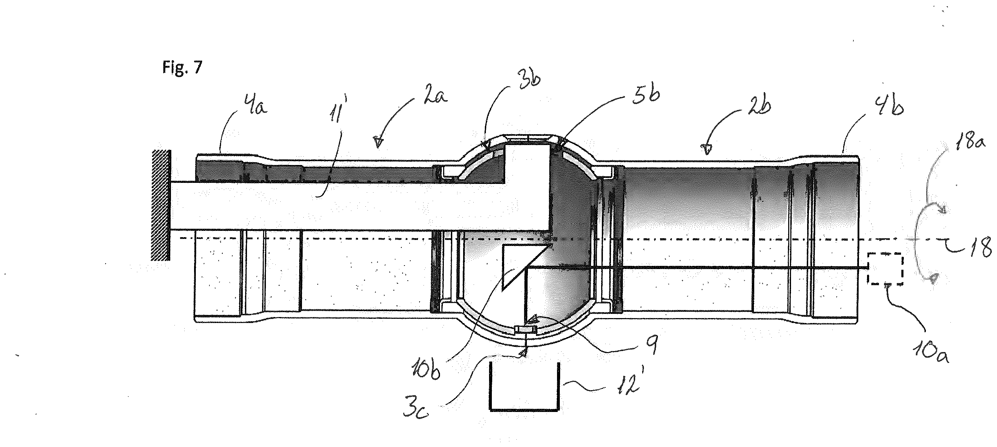

Fig. 7 shows an alternative embodiment of the invention where the welding process is performed from the inner space of the valve housing 2. Here, the welding laser/torch 10a is arranged relative to the connection end 4b of the second housing parts 2b. The welding laser/torch 10a is connected to a power/energy source (not shown) also located outside the valve housing 2. A mirror 10b is arranged inside the inner space of the central part 3. The mirror 10b is aligned with the welding ends 3c of the first and second housing parts 2a, 2b and further with the welding laser/torch 10a. A welding beam, e.g. a laser beam, is projected from the welding laser/torch and reflected by the mirror 10b to form the welding seam 9.

The indexer 12' is held in fixed position at the outer side of the valve housing 2 below the position 9a where the welding occurs. Alternatively or additionally, the indexer may be held in a fixed position at the inner space of the valve housing 2 below the welding spot 9a. This enables the indexer to collect any surplus material arising from the welding procedure so it cannot attach to the ball or the valve seats, seals etc.

The ball 5 is held in fixed, non-rotating position in the inner space of the valve housing 2. This is achieved by an arm 11' extending into the connection 4a of the first housing part 2a. The arm 11' has a free end shaped so that it faces the indexer aperture 5b of the ball 5 when inserted into the connection end. The end surface of the arm's free end may be flushed with the outer surface of the ball 5, or project slightly into the space between the ball 5 and the central part 3 of the valve housing.

In the present application, the term "approximately" is used which includes the tolerances seen as normal by the skilled in the art. For example, the term "approximately circular" is used, and "approximately" is here to be understood in the way that the skilled in the art visually perceives the shape as circular or substantially circular, besides including the tolerances seen as normal by the skilled in the art by possible measuring and determining the shape of the workpiece.

The invention is not limited to the above described embodiments and not to the embodiments shown in the drawings either, and the invention as specified and defined in the claims may be supplemented and modified in any way as suggested by a person skilled in the art, within the scope defined by the appended claims.

### List of reference numbers:

1. valve
2. valve housing
   a. first (half) housing part
   b. second (half) housing part
   c. transit area between central part and connection end
3. central part
   a. (half) part of central housing
   b. inner space of valve housing's central part
   c. welding end
4. connection ends
   a. first connection end
   b. second connection end
5. ball
   a. spindle attachment opening
   b. indexer aperture
   c. ball body
6. through-going opening in ball
7. valve seat
8. valve spindle
   a. valve spindle opening in valve housing
9. welding seam on valve housing
   a. welding spot
10. welding tool
   a. welding laser/welding torch
   b. mirror
11. arm/shaft of welding tool
   a. radial bore for indexer
12. indexer
   a. bore (conical)
   b. sliding surface
   c. connecting bore
   d. arrow indicating radial in/out movement of indexer
13. indexer actuator
   a. sliding surface, wedged surface
   b. arrow indicating axial in/out movement of indexer actuator
14. duct or bore in arm/shaft
15. turret
16. bushing/holder for valve housing part
17. bearing
18. rotation axis/longitudinal axis
   a. Rotating direction
19. Camera

## Claims

1. A method for producing a ball valve for regulating a fluid, the ball valve including a valve housing (2) with a central part (3) and with two connection ends (4), the connection ends (4) extending away from the central part (3), wherein internally of the central part (3) there is arranged a valve element, wherein the valve element is arranged relative to one or more valve seats (7) in the central part (3) of the valve housing (2), and wherein the method of producing the valve housing (2) at least includes the following steps:
- providing at least a first housing part (2a) and a second housing part (2b), said first and second housing parts (2a, 2b) each comprising at least a central housing part (3a) and a connection end (4a, 4b), and
- providing a valve element shaped as a ball (5) with at least one through-going aperture (6),
- arranging the first and second housing parts (2a, 2b) at a position with the central part ends (3a) facing towards each other, and further arranging the ball (5) at a position inside an inner space (3b) of the central part (3),
- welding the first and second housing parts (2a, 2b) together using a welding tool (10) to provide the valve housing (2), **characterized in that** the welding is performed while performing a relative rotation in a rotating direction (18a) about a rotation axis (18) between the position of the first and second housing parts (2a, 2b) and the positions of the ball (5) and the welding tool (10) to provide a valve housing (2) with a single welding seam (9) arranged at the central part (3) of the valve housing (2), the rotation axis (18) coinciding with a central longitudinal axis of the valve housing (2) and ball (5), wherein the welding is performed either from the inner space (3b) or an outer side of the central part (3) and that the relative rotation is performed by:
- rotating the first and second housing parts (2a, 2b) relative to the positions of the ball (5) and the welding tool (10), and/or
- rotating the ball (5) and the welding tool (10) relative to the position of the first and second housing parts (2a, 2b).

2. A method according to claim 1, **characterized in that** the welding seam (9) is made with laser welding.

3. A method according to any of the claims 1 to 2, **characterized in that** the first and second housing parts (2a, 2b) are identical in shape.

4. A method according to any of the claims 1 to 3, **characterized in that** a valve seat (7) is arranged in the first and/or the second housing parts (2a, 2b) prior to the assembly of the valve housing (2).

5. A method according to any of the claims 1 to 4, **characterized in that** the ball (5) is maintained inside and relative to the central part (3) of the valve housing (2) by means of the welding tool (10), the welding tool (10) having:
- an expandable mandrel, where the ball (5) is held firmly on the mandrel when the mandrel is inserted into the through-going aperture (6) of the ball (5) and then expanded,
or
- an arm (11) with an indexer (12), where the ball (5) is held in a fixed position on the arm (11) by the indexer (12) engaging an indexer aperture (5b) in the ball (5).

6. A method according to any of the claims 1 to 5, **characterized in that** a protective gas is introduced into the inner space (3b) of the valve housing's central part (3) through a connection (14) through the arm (11) and/or through a connection end's (4) opening.

7. A method according to any of the claims 1 to 6, **characterized in that** the method further comprises inspecting the welding seam (9) on the interior of the valve housing's central part (3), preferably using a camera (19) arranged on an arm (11).

8. A ball valve for regulating a fluid, the ball valve including a valve housing (2) with housing parts (2a, 2b), a central part (3) and with two connection ends (4), the connection ends (4) extending away from the central part (3), wherein internally of the central part (3) there is arranged a valve element shaped as a ball (5) with at least one through-going aperture (6), wherein the ball (5) is arranged relative to one or more valve seats (7) in the central part (3) of the valve housing (2), **characterized in that** the valve housing (2) is assembled by a single welding seam (9) welding together the housing parts (2a, 2b), the welding seam being provided centrally at the central part (3) of the valve housing (2) using the method according to any one of claims 1 to 7.

9. A ball valve according to claim 8, **characterized in that** the ball valve is a floating ball valve or a trunnion ball valve.

10. A ball valve according to claim 8 or 9, **characterized in that** the ball (5) comprises further an indexer aperture (5b), where said indexer aperture (5b) in the ball (5) is adapted in size, shape and/or position to engage with an indexer (12) of a welding tool (10) and allow it to pass into the indexer aperture (5b) and fix the ball (5) firmly in a non-rotating manner.

11. A welding tool (10) for holding and handling housing parts (2a, 2b) and a ball (5) of a ball valve according to any of the claims 8 to 10 during welding, said welding tool (10) comprises
- a welding laser (10a) or welding torch configured to be at least positioned relative to a central housing part (3a) of each of the housing parts (2a, 2b) and to weld the housing parts (2a, 2b) together from an inner space (3b) or an outer side of a central part (3) of a valve housing (2) of the ball valve,
- holding means configured to hold the ball (5) in a position inside the central part (3) of the valve housing (2) of the ball valve, and
- rotation means configured to perform a relative rotation about an axial rotation axis (18) between a position of the housing parts (2a, 2b) and the positions of the ball (5) and the welding laser (10a) or welding torch, **characterized in that** the rotation means is configured to perform the relative rotation by:
- rotating the housing parts (2a, 2b) around said axial rotation axis relative to stationary positions of the ball (5) and of the welding laser (10a) or welding torch, and/or
- rotating the ball (5) and the welding laser (10a) or welding torch around said axial rotation axis relative to a stationary position of the housing parts (2a, 2b).

12. A welding tool according to claim 11, **characterized in that** the holding means comprises:
- an expandable mandrel configured to be inserted into a through-going aperture (6) of the ball (5), wherein the mandrel is further configured to be expanded when inserted into the through-going aperture (6) so that the ball (5) is held firmly on the mandrel, or
- an arm (11) with a radial bore (11a) in which an indexer (12) is arranged, and where the indexer (12) is configured to engage with an indexer aperture (5b) of the ball (5) and fix the ball (5) firmly, in a non-rotating manner, and wherein the indexer (12) is further configured to slide radially out of and/or into the radial bore (11a) by means of an indexing actuator (13) arranged in the arm (11).

13. A welding tool according to claim 12, **characterized in that** the welding tool (10) comprises one or more gas ducts (14) for introduction and/or withdrawal of a protective gas into the inner space (3b) of the valve housing (2).

14. A welding tool according to any claim 12 or 13, **characterized in that** the indexer (12) further comprises a connecting bore (12c) for connecting at least one gas duct (14) with the indexer's radial bore (12a) at least when the indexer (12) is in the expanded position.

15. A welding tool according to any of the claims 12 to 14, **characterized in that** the rotation means comprises a turret (15) and a bearing (17) with a support bushing (16), where one of the turret (15) and the bearing (17) with the support bearing (16) is arranged at one end of the valve housing (2) and to surround the arm (11), and where the other of the turret (15) and the bearing (17) with the support bearing (16) is arranged to engage with an opposite end of the valve housing (2) so as to enable rotation of the housing parts (2a, 2b).

## Patentansprüche

1. Verfahren zum Herstellen eines Kugelventils zum Regulieren eines Fluids, wobei das Kugelventil ein Ventilgehäuse (2) mit einem Mittelteil (3) und mit zwei Anschlussenden (4) beinhaltet, wobei sich die Anschlussenden (4) von dem Mittelteil (3) weg erstrecken, wobei innerhalb des Mittelteils (3) ein Ventilelement angeordnet ist, wobei das Ventilelement relativ zu einem oder mehreren Ventilsitzen (7) in dem Mittelteil (3) des Ventilgehäuses (2) angeordnet ist, und wobei das Verfahren zum Herstellen des Ventilgehäuses (2) mindestens die folgenden Schritte beinhaltet:
- Bereitstellen mindestens eines ersten Gehäuseteils (2a) und eines zweiten Gehäuseteils (2b), wobei das erste und zweite Gehäuseteil (2a, 2b) jeweils mindestens ein Gehäusemittelteil (3a) und ein Anschlussende (4a, 4b) umfassen, und
- Bereitstellen eines als Kugel (5) geformten Ventilelements mit mindestens einer Durchgangsöffnung (6),
- Anordnen des ersten und zweiten Gehäuseteils (2a, 2b) in einer Position, in der die Mittelteilenden (3a) einander zugewandt sind, und ferner Anordnen der Kugel (5) in einer Position innerhalb eines Innenraums (3b) des Mittelteils (3),
- Verschweißen des ersten und zweiten Gehäuseteils (2a, 2b) miteinander unter Verwendung eines Schweißwerkzeugs (10) zum Bereitstellen des Ventilgehäuses (2), **dadurch gekennzeichnet, dass** das Verschweißen unter Durchführen einer Relativdrehung in einer Drehrichtung (18a) um eine Drehachse (18) zwischen der Position des ersten und zweiten Gehäuseteils (2a, 2b) und den Positionen der Kugel (5) und des Schweißwerkzeugs (10) durchgeführt wird, um ein Ventilgehäuse (2) mit einer einzigen Schweißnaht (9) bereitzustellen, die an dem Mittelteil (3) des Ventilgehäuses (2) angeordnet ist, wobei die Drehachse (18) mit einer Mittellängsachse des Ventilgehäuses (2) und der Kugel (5) zusammenfällt, wobei das Verschweißen entweder vom Innenraum (3b) oder von einer Außenseite des Mittelteils (3) aus erfolgt und die Relativdrehung durch Folgendes erfolgt:
- Drehen des ersten und zweiten Gehäuseteils (2a, 2b) relativ zu den Positionen der Kugel (5) und des Schweißwerkzeugs (10), und/oder
- Drehen der Kugel (5) und des Schweißwerkzeugs (10) relativ zu der Position des ersten und zweiten Gehäuseteils (2a, 2b) .

2. Verfahren nach Anspruch 1, **dadurch gekennzeichnet, dass** die Schweißnaht (9) mittels Laserschweißen hergestellt wird.

3. Verfahren nach einem der Ansprüche 1 bis 2, **dadurch gekennzeichnet, dass** das erste und das zweite Gehäuseteil (2a, 2b) die gleiche Form haben.

4. Verfahren nach einem der Ansprüche 1 bis 3, **dadurch gekennzeichnet, dass** vor dem Zusammenbau des Ventilgehäuses (2) ein Ventilsitz (7) in dem ersten und/oder dem zweiten Gehäuseteil (2a, 2b) angeordnet wird.

5. Verfahren nach einem der Ansprüche 1 bis 4, **dadurch gekennzeichnet, dass** die Kugel (5) mittels des Schweißwerkzeugs (10) innerhalb des Mittelteils (3) des Ventilgehäuses (2) und relativ dazu gehalten wird, wobei das Schweißwerkzeug (10) Folgendes aufweist:
- einen expandierbaren Dorn, wobei die Kugel (5) beim Einführen des Dorns in die Durchgangsöffnung (6) der Kugel (5) und anschließendem Expandieren fest auf dem Dorn gehalten wird, oder
- einen Arm (11) mit einem Indexierer (12), wobei die Kugel (5) in einer festen Position an dem Arm (11) gehalten wird, indem der Indexierer (12) in eine Indexiereröffnung (5b) in der Kugel (5) eingreift.

6. Verfahren nach einem der Ansprüche 1 bis 5, **dadurch gekennzeichnet, dass** ein Schutzgas durch eine Verbindung (14) durch den Arm (11) und/oder durch eine Öffnung des Anschlussendes (4) in den Innenraum (3b) des Mittelteils (3) des Ventilgehäuses eingeleitet wird.

7. Verfahren nach einem der Ansprüche 1 bis 6, **dadurch gekennzeichnet, dass** das Verfahren ferner Inspizieren der Schweißnaht (9) auf dem Inneren des Mittelteils (3) des Ventilgehäuses umfasst, bevorzugt unter Verwendung einer an einem Arm (11) angeordneten Kamera (19).

8. Kugelventil zum Regulieren eines Fluids, wobei das Kugelventil ein Ventilgehäuse (2) mit Gehäuseteilen (2a, 2b),
einem Mittelteil (3) und mit zwei Anschlussenden (4) beinhaltet, wobei sich die Anschlussenden (4) von dem Mittelteil (3) weg erstrecken, wobei innerhalb des Mittelteils (3) ein als Kugel (5) geformtes Ventilelement mit mindestens einer Durchgangsöffnung (6) angeordnet ist, wobei die Kugel (5) relativ zu einem oder mehreren Ventilsitzen (7) im Mittelteil (3) des Ventilgehäuses (2) angeordnet ist, **dadurch gekennzeichnet, dass**
das Ventilgehäuse (2) durch eine einzige Schweißnaht (9) zusammengebaut wird, die die Gehäuseteile (2a, 2b) miteinander verschweißt, wobei die Schweißnaht mittig an dem Mittelteil (3) des Ventilgehäuses (2) unter Verwendung des Verfahrens nach einem der Ansprüche 1 bis 7 bereitgestellt wird.

9. Kugelventil nach Anspruch 8, **dadurch gekennzeichnet, dass** das Kugelventil ein Schwimmkugelventil oder ein Zapfenkugelventil ist.

10. Kugelventil nach Anspruch 8 oder 9, **dadurch gekennzeichnet, dass** die Kugel (5) ferner eine Indexiereröffnung (5b) aufweist, wobei die Indexiereröffnung (5b) in der Kugel (5) in Größe, Form und/oder Position so ausgelegt ist, dass sie mit einem Indexierer (12) eines Schweißwerkzeugs (10) in Eingriff kommt und diesem ermöglicht, in die Indexiereröffnung (5b) zu gelangen und die Kugel (5) drehfest zu fixieren.

11. Schweißwerkzeug (10) zum Halten und Handhaben von Gehäuseteilen (2a, 2b) und einer Kugel (5) eines Kugelventils nach einem der Ansprüche 8 bis 10 während des Schweißens, wobei das Schweißwerkzeug (10) Folgendes umfasst:
- einen Schweißlaser (10a) oder Schweißbrenner, der dazu konfiguriert ist, mindestens relativ zu einem Gehäusemittelteil (3a) jedes der Gehäuseteile (2a, 2b) positioniert zu werden und die Gehäuseteile (2a, 2b) aus einem Innenraum (3b) oder einer Außenseite eines Mittelteils (3) eines Ventilgehäuses (2) des Kugelventils miteinander zu verschweißen,
- Haltemittel, das dazu konfiguriert ist, die Kugel (5) in einer Position innerhalb des Mittelteils (3) des Ventilgehäuses (2) des Kugelventils zu halten, und
- Drehmittel, das dazu konfiguriert ist, eine Relativdrehung um eine axiale Drehachse (18) zwischen einer Position der Gehäuseteile (2a, 2b) und den Positionen der Kugel (5) und des Schweißlasers (10a) oder Schweißbrenners auszuführen, **dadurch gekennzeichnet, dass** das Drehmittel dazu konfiguriert ist, die Relativdrehung durch Folgendes auszuführen:
- Drehen der Gehäuseteile (2a, 2b) um die axiale Drehachse relativ zu stationären Positionen der Kugel (5) und des Schweißlasers (10a) oder Schweißbrenners, und/oder
- Drehen der Kugel (5) und des Schweißlasers (10a) oder Schweißbrenners um die axiale Drehachse relativ zu einer stationären Position der Gehäuseteile (2a, 2b).

12. Schweißwerkzeug nach Anspruch 11, **dadurch gekennzeichnet, dass** das Haltemittel Folgendes umfasst:
- einen expandierbaren Dorn, der dazu konfiguriert ist, in eine Durchgangsöffnung (6) der Kugel (5) eingeführt zu werden, wobei der Dorn ferner dazu konfiguriert ist, bei Einführen in die Durchgangsöffnung (6) expandiert zu werden, sodass die Kugel (5) fest auf dem Dorn gehalten wird, oder
- einen Arm (11) mit einer Radialbohrung (11a), in der ein Indexierer (12) angeordnet ist, und wobei der Indexierer (12) dazu konfiguriert ist, in eine Indexiereröffnung (5b) der Kugel (5) einzugreifen und die Kugel (5) fest, drehfest zu fixieren, und wobei der Indexierer (12) ferner dazu konfiguriert ist, mittels eines im Arm (11) angeordneten Indexaktuators (13) radial aus der und/oder in die Radialbohrung (11a) zu gleiten.

13. Schweißwerkzeug nach Anspruch 12, **dadurch gekennzeichnet, dass** das Schweißwerkzeug (10) einen oder mehrere Gaskanäle (14) zum Einleiten und/oder Abziehen eines Schutzgases in den Innenraum (3b) des Ventilgehäuses (2) umfasst.

14. Schweißwerkzeug nach einem der Ansprüche 12 oder 13, **dadurch gekennzeichnet, dass** der Indexierer (12) ferner eine Verbindungsbohrung (12c) zum Verbinden mindestens eines Gaskanals (14) mit der Radialbohrung (12a) des Indexierers aufweist, mindestens wenn sich der Indexierer (12) in der expandierten Position befindet.

15. Schweißwerkzeug nach einem der Ansprüche 12 bis 14, **dadurch gekennzeichnet, dass** das Drehmittel einen Drehkopf (15) und ein Lager (17) mit einer Stützbuchse (16) umfasst, wobei eines von Drehkopf (15) und Lager (17) mit dem Stützlager (16) an einem Ende des Ventilgehäuses (2) angeordnet ist und den Arm (11) umgibt, und wobei das andere von Drehkopf (15) und Lager (17) mit dem Stützlager (16) zum Eingreifen in ein entgegengesetztes Ende des Ventilgehäuses (2) angeordnet ist, um eine Drehung der Gehäuseteile (2a, 2b) zu ermöglichen.

## Revendications

1. Procédé de production d'une soupape à bille destinée à réguler un fluide, la soupape à bille comportant un carter de soupape (2) avec une partie centrale (3) et deux extrémités de liaison (4), les extrémités de liaison (4) se prolongeant à l'opposé de la partie centrale (3), dans lequel, à l'intérieur d'une partie centrale (3), est agencé un élément de soupape, dans lequel l'élément de soupape est agencé par rapport à un ou plusieurs sièges de soupape (7) dans la partie centrale (3) du carter de soupape (2), et dans lequel le procédé de production du carter de soupape (2) comporte au moins les étapes suivantes :
- fourniture d'au moins une première partie de carter (2a) et une seconde partie de carter (2b), lesdites première et seconde parties de carter (2a, 2b) comprenant chacune au moins une partie de carter centrale (3a) et une extrémité de liaison (4a, 4b), et
- fourniture d'un élément de soupape en forme de bille (5) avec au moins une ouverture traversante (6),
- agencement des première et seconde parties de carter (2a, 2b) dans une position avec les extrémités de partie centrale (3a) tournées l'une vers l'autre, et agencement également de la bille (5) dans une position à l'intérieur d'un espace interne (3b) de la partie centrale (3),
- soudage des première et seconde parties de carter (2a, 2b) ensemble à l'aide d'un outil de soudage (10) pour fournir le carter de soupape (2), **caractérisé en ce que** le soudage est effectué tout en effectuant une rotation relative dans une direction de rotation (18a) autour d'un axe de rotation (18) entre la position des première et seconde parties de carter (2a, 2b) et les positions de la bille (5) et de l'outil de soudage (10) pour fournir un carter de soupape (2) avec un seul cordon de soudure (9) agencé au niveau de la partie centrale (3) du carter de soupape (2), l'axe de rotation (18) coïncidant avec un axe longitudinal central du carter de soupape (2) et de la bille (5), dans lequel le soudage est effectué soit à partir de l'espace interne (3b) soit à partir d'un côté externe de la partie centrale (3) et **en ce que** la rotation relative est effectuée par :
- la rotation des première et seconde parties de carter (2a, 2b) par rapport aux positions de la bille (5) et de l'outil de soudage (10), et/ou
- la rotation de la bille (5) et de l'outil de soudage (10) par rapport à la position des première et seconde parties de carter (2a, 2b).

2. Procédé selon la revendication 1, **caractérisé en ce que** le cordon de soudure (9) est réalisé par soudage laser.

3. Procédé selon l'une quelconque des revendications 1 à 2, **caractérisé en ce que** les première et seconde parties de carter (2a, 2b) sont de forme identique.

4. Procédé selon l'une quelconque des revendications 1 à 3, **caractérisé en ce qu'**un siège de soupape (7) est agencé dans la première et/ou la seconde partie de carter (2a, 2b) avant l'assemblage du carter de soupape (2).

5. Procédé selon l'une quelconque des revendications 1 à 4, **caractérisé en ce que** la bille (5) est maintenue à l'intérieur de la partie centrale (3) du carter de soupape (2), et par rapport à celle-ci, au moyen de l'outil de soudage (10), l'outil de soudage (10) ayant :
- un mandrin extensible, dans lequel la bille (5) est maintenue fermement sur le mandrin lorsque le mandrin est inséré à l'intérieur de l'ouverture traversante (6) de la bille (5) et puis étendu, ou
- un bras (11) avec un indexeur (12), dans lequel la bille (5) est maintenue dans une position fixe sur le bras (11) par l'indexeur (12) mettant en prise une ouverture d'indexeur (5b) dans la bille (5).

6. Procédé selon l'une quelconque des revendications 1 à 5, **caractérisé en ce qu'**un gaz protecteur est introduit à l'intérieur de l'espace interne (3b) de la partie centrale (3) du carter de soupape par une liaison (14) à travers le bras (11) et/ou par une ouverture d'une extrémité de liaison (4).

7. Procédé selon l'une quelconque des revendications 1 à 6, **caractérisé en ce que** le procédé comprend également l'inspection du cordon de soudure (9) à l'intérieur de la partie centrale (3) du carter de soupape, de préférence à l'aide d'une caméra (19) agencée sur un bras (11).

8. Soupape à bille destinée à réguler un fluide, la soupape à bille comportant un carter de soupape (2) avec des parties de carter (2a, 2b),
une partie centrale (3) et avec deux extrémités de liaison (4), les extrémités de liaison (4) se prolongeant à l'opposé de la partie centrale (3), dans laquelle, à l'intérieur de la partie centrale (3), est agencé un élément de soupape en forme de bille (5) avec au moins une ouverture traversante (6), dans laquelle la bille (5) est agencée par rapport à un ou plusieurs sièges de soupape (7) dans la partie centrale (3) du carter de soupape (2), **caractérisée en ce que**
le carter de soupape (2) est assemblé par un seul cordon de soudure (9) soudant ensemble les parties de carter (2a, 2b), le cordon de soudure étant disposé centralement au niveau de la partie centrale (3) du carter de soupape (2) en utilisant le procédé selon l'une quelconque des revendications 1 à 7.

9. Soupape à bille selon la revendication 8, **caractérisée en ce que** la soupape à bille est une soupape à bille flottante ou une soupape à bille à tourillon.

10. Soupape à bille selon la revendication 8 ou 9, **caractérisée en ce que** la bille (5) comprend également une ouverture d'indexeur (5b), dans laquelle ladite ouverture d'indexeur (5b) dans la bille (5) est adaptée en taille, forme et/ou position pour se mettre en prise avec un indexeur (12) d'un outil de soudage (10) et lui permettre de passer dans l'ouverture d'indexeur (5b) et de fixer la bille (5) fermement de manière non rotative.

11. Outil de soudage (10) pour maintenir et manipuler des parties de carter (2a, 2b) et une bille (5) d'une soupape à bille selon l'une quelconque des revendications 8 à 10 pendant le soudage, ledit outil de soudage (10) comprenant :
- un laser de soudage (10a) ou un chalumeau de soudage configuré pour être au moins positionné par rapport à une partie de carter centrale (3a) de chacune des parties de carter (2a, 2b) et pour souder les parties de carter (2a, 2b) ensemble à partir d'un espace interne (3b) ou d'un côté externe d'une partie centrale (3) d'un carter de soupape (2) de la soupape à bille,
- des moyens de maintien configurés pour maintenir la bille (5) dans une position à l'intérieur de la partie centrale (3) du carter de soupape (2) de la soupape à bille, et
- des moyens de rotation configurés pour effectuer une rotation relative autour d'un axe de rotation axial (18) entre une position des parties de carter (2a, 2b) et les positions de la bille (5) et du laser de soudage (10a) ou du chalumeau de soudage, **caractérisé en ce que** les moyens de rotation sont configurés pour effectuer la rotation relative par :
- la rotation des parties de carter (2a, 2b) autour dudit axe de rotation axial par rapport aux positions fixes de la bille (5) et du laser de soudage (10a) ou du chalumeau de soudage, et/ou
- la rotation de la bille (5) et du laser de soudage (10a) ou du chalumeau de soudage autour dudit axe de rotation axial par rapport à la position fixe des parties de carter (2a, 2b).

12. Outil de soudage selon la revendication 11, **caractérisé en ce que** les moyens de maintien comprennent :
- un mandrin extensible configuré pour être inséré à l'intérieur d'une ouverture traversante (6) de la bille (5), dans lequel le mandrin est également configuré pour être étendu lorsqu'il est inséré à l'intérieur de l'ouverture traversante (6) de sorte que la bille (5) soit maintenue fermement sur le mandrin, ou
- un bras (11) avec un orifice radial (11a) dans lequel est agencé un indexeur (12), et dans lequel l'indexeur (12) est configuré pour se mettre en prise avec une ouverture d'indexeur (5b) de la bille (5) et fixer la bille (5) fermement, d'une manière non rotative, et dans lequel l'indexeur (12) est également configuré pour coulisser radialement hors et/ou à l'intérieur de l'orifice radial (11a) au moyen d'un actionneur d'indexation (13) agencé dans le bras (11).

13. Outil de soudage selon la revendication 12, **caractérisé en ce que** l'outil de soudage (10) comprend un ou plusieurs conduits de gaz (14) pour l'introduction et/ou le retrait d'un gaz protecteur à l'intérieur de l'espace interne (3b) du carter de soupape (2).

14. Outil de soudage selon l'une quelconque des revendications 12 ou 13, **caractérisé en ce que** l'indexeur (12) comprend également un orifice de liaison (12c) pour relier au moins un conduit de gaz (14) à l'orifice radial (12a) de l'indexeur au moins lorsque l'indexeur (12) est en position étendue.

15. Outil de soudage selon l'une quelconque des revendications 12 à 14, **caractérisé en ce que** les moyens de rotation comprennent une tourelle (15) et un palier (17) avec une douille de support (16), dans lequel l'un de la tourelle (15) et du palier (17) avec le palier de support (16) est agencé à une extrémité du carter de soupape (2) et pour entourer le bras (11), et dans lequel l'autre de la tourelle (15) et du palier (17) avec le palier de support (16) est agencé pour se mettre en prise avec une extrémité opposée du carter de soupape (2) de manière à permettre la rotation des parties de carter (2a, 2b).
